# EUROPÄISCHE PATENTANMELDUNG

(11) **EP 0 911 986 A2**
(43) Veröffentlichungstag der Anmeldung: **28.04.1999**
(21) Anmeldenummer: 98119829.4
(22) Anmeldetag: 20.10.1998
(51) Int. Cl.: H04B 1/10, H04B 1/16

(54) **Verfahren zur Erkennung con Multipathstörungen und Schaltungsanordnung zur Durchführung des Verfahrens**

(30) Priorität: 22.10.1997 DE 19746501
(71) Anmelder: GRUNDIG Aktiengesellschaft, 90762 Fürth (DE)
(72) Erfinder: Bienefeld, Axel c/o GRUNDIG AG, 90762 Fuerth (DE); Steger, Konrad c/o GRUNDIG AG, 90762 Fuerth (DE)

(57) **Zusammenfassung**

Die Erfindung betrifft ein Verfahren und eine Schaltungsanordnung zur Erkennung und Reduzierung von Multipathstörungen in einem Rundfunksignal. Bei diesem Verfahren wird ein Eingangssignal, welches mit Multipathstörungen behaftet ist, einem Spitzenwertgleichrichtereinheit zugeführt. Über eine Komparatoreinheit werden im Eingangssignal vorhandene Impulse, welche typischerweise bei Multipathstörungen auftreten, erkannt und die Komparatoreinheit triggert auf diese Störungen. Das hierdurch entstehnde Trigger-Signal wird entweder über jeweils mindestens ein Zeitkonstantenglied geführt und/oder zur Signalisierung an einen Mikrocomputer oder weitere Baugruppen geleitet. Das entstehende Signal wird zur Ansteuerung von verschiedenen Funktionen verwendet.

## Beschreibung

Die Erfindung betrifft ein Verfahren zur Erkennung von Multipathstörungen beim Empfang von frequenzmodulierten Rundfunksendungen, insbesondere mit einem mobilen Rundfunkempfänger, sowie eine Schaltungsanordnung zur Durchführung des Verfahrens.

Multipathstörungen, auch Mehrwegeempfangsstörungen genannt, treten insbesondere bei in Kraftfahrzeugen betriebenen UKW-Rundfunkempfängern auf, da sich die Empfangsverhältnisse durch die Bewegung des Kraftfahrzeuges fortlaufend ändern. Diese Störungen treten unter anderem als Einbrüche im Feldstärkesignal auf. Diese Störungen sind, von den Auswirkungen im Audiokanal, in unterschiedliche Kategorien einzuteilen. Die Hauptkategorien sind hochfrequente zischelnde Störungen und niederfrequente Stereo-Interferenzgeräusche, wobei während eines Multipathereignisses meist beide Störungen mit variabler Gewichtung auftreten.

Bei Multipathstörungen kommt es bei einigen Stereodekodern, selbst bei sehr hoher Feldstärke, zu einem sogenannten Stereowobbeln (abruptes Umschalten zwischen Stereo und Mono).
Um Multipathstörungen zu reduzieren, ist es beispielsweise bekannt permanent die Höhen des Audiosignals abzusenken. Auf diese Weise wird bei Monosignalen ein beachtlicher Erfolg erzielt.

Eine weitere Verbesserung, vor allem bei Stereosignalen, läßt sich durch eine Mono-Überblendung während des Multipathereignisses erzielen.

Aus DE 37 21 918 ist ein Verfahren bekannt, welches Mehrwege-, Nebenkanal- und Gleichkanalstörungen erkennt. Hierbei wird ein Feldstärkeanzeigesignal in unterschiedlichen Frequenzbereichen, in denen die unterschiedlichen Störungsarten auftreten, unterschiedlich verstärkt, für alle Störungsarten summiert und über der Zeit integriert. Das hierdurch entstehende Signal wird anschließend von dem Feldstärkeanzeigesignal in der Stereo-Überblendschaltung subtrahiert. Nachteilig ist hierbei die träge Reaktion aufgrund der Integration.

Aus DE 3925629 ist ein Verfahren zum Erkennen von Mehrwegeempfangsstörungen beim Empfang von frequenzmodulierten Rundfunksendungen mit einem mobilen Rundfunkempfänger bekannt. Es wird einer Vergleichsschaltung der Pegel des Spektrums des heruntergemischten HF-Signals (MPX-Signal) oberhalb der höchsten Modulationsfrequenz zugeführt. Der Pegel des Spektrums des HF-Signals (MPX-Signal) oberhalb der höchsten Modulationsfrequenz wird ausgewertet und in einer Vergleichsschaltung mit dem Pegel der Nutzmodulation verglichen. Eine Mehrwegeempfangsstörung wird erkannt, wenn der Quotient der beiden Signalpegel eine vorgeschriebene Schwelle überschreitet.

Aus US 4 255 816 ist ein Empfänger mit zwei Antennen bekannt, bei welchem das Empfangssignal eines Empfangskanales mit einem vordefinierten Schwellwert verglichen wird. Sinkt das Empfangssignal unter den Schwellwert ab, wird von der ersten Antenne auf die zweite Antenne umgeschaltet.

Aufgabe der Erfindung ist es ein einfaches und effizientes Verfahren zur Erkennung von Multipathstörungen in einem mobilen Rundfunkempfänger, sowie eine Schaltungsanordnung zur Durchführung dieses Verfahrens anzugeben.

Diese Aufgabe wird mit den Merkmalen des Anspruches 1, sowie den Merkmalen des Anspruches 4 gelöst. Vorteilhafte Ausgestaltungen und Weiterbildungen der Erfindung ergeben sich aus den abhängigen Ansprüchen.
Der Vorteil der Erfindung ist, daß ein sehr schnelles Ansprechen auf die Multipathstörung gewährleistet und die Empfindlichkeit des Ansprechens frei einstellbar ist. Im weiteren ist von Vorteil, daß nur ein geringer Schaltungsaufwand erforderlich ist.

Vorteilhaft bei der Schaltungsanordnung gemäß Anspruch 6 ist, daß sich mit der Schaltungsanordnung verschiedene Signale im mobilen Rundfunkempfänger mit unterschiedlicher Wirkungstiefe und unabhängigem Zeitverlauf beeinflussen lassen.

Die Merkmale der Erfindung werden im folgenden an einem exemplarischen Ausführungsbeispiel anhand von Zeichnungen erläutert. Das Ausführungsbeispiel ist keine erschöpfende Aufzählung der erfindungsgemäßen Ausgestaltungsmöglichkeiten, sondern hat nur beispielhaften Charakter. Die Merkmale der Ansprüche können einzeln oder in beliebiger Kombination miteinander benutzt werden.

Es zeigt:
- FIG 1 ein Blockschaltbild eines Ausführungsbeispiels der Schaltungsanordnung;
- FIG 2 ein weiteres Blockschaltbild eines Ausführungsbeispieles.

Zur Erkennung von Multipathstörungen ist die Feldstärke, insbesondere deren Wechselspannungsanteile besonders geeignet.

Auf der Feldstärke und dem Multiplexsignal entstehen bei Multipathstörungen breitbandige Wechselspannungsanteile. Im Zeitbereich weist die Feldstärke typische negative Spikes, in Form von sehr kurzen Feldstärkeeinbrüchen, auf.

Ein mit Multipathstörungen behaftet Eingangssignal wird spitzenwertgleichgerichtet und einer Komparatorschaltung zusammen mit dem Eingangssignal zugeführt. Die Spitrenwertgleichrichtung wird mittels eines Gleichrichters mit nachgeschaltetem Integrator erzielt. Hierdurch werden die negativen Spikes im Signal unterdrückt. Die Komparatorschaltung vergleicht das Eingangssignal und das spitzenwertgleichgerichtete Eingangssignal miteinander. Treten in dem Eingangssignal negative Spikes auf, so sinkt der Pegel des Eingangssignals kurzzeitig unter den Pegel des spitsenwertgleichgerichteten Eingangssignals ab. Diese Absenkung wird von der Komparatorschaltung detektiert. Die Komparatorschaltung triggert auf diese negativen Spikes und auf am Ausgang der Komparatorschaltung wird in diesem Fall ein Signal generiert, über welches weiterer Maßnahmen zur Reduktion von Multipathstörungen eingeleitet werden.

Als vorteilhaft hat sich erwiesen, wenn die Komparatorschaltung in Form eines schwimmender Komparator realisiert wird.

Durch die Dimensionierung des schwimmenden Komparators wird eine Unterscheidung zwischen ausbreitungsbedingten Feldstärkeschwankungen und Multipathstörungen getroffen. Auf diese Weise werden nur Multipathstörungen detektiert.

Vorteilhaft nach Anspruch 4 hat sich als Maßnahme zur Reduktion von Multipathstörungen eine dynamische Höhenabsenkung (Highcut), eine Stereo-Mono-Überblendung (Stereoblend) oder eine Lautstärkebeeinflussung (Mute) oder eine Kombination der einzelner oder aller vorherig genannten Maßnahmen erwiesen. Durch diese Maßnahmen werden die wahrnehmbaren Multipathstörungen weitgehend unterdrückt.

Im weiteren hat sich vorteilhaft erwiesen, wenn das Eingangssignal über einen Buffer geleitet wird. Der Buffer dient der Entkopplung des Eingangssignal.

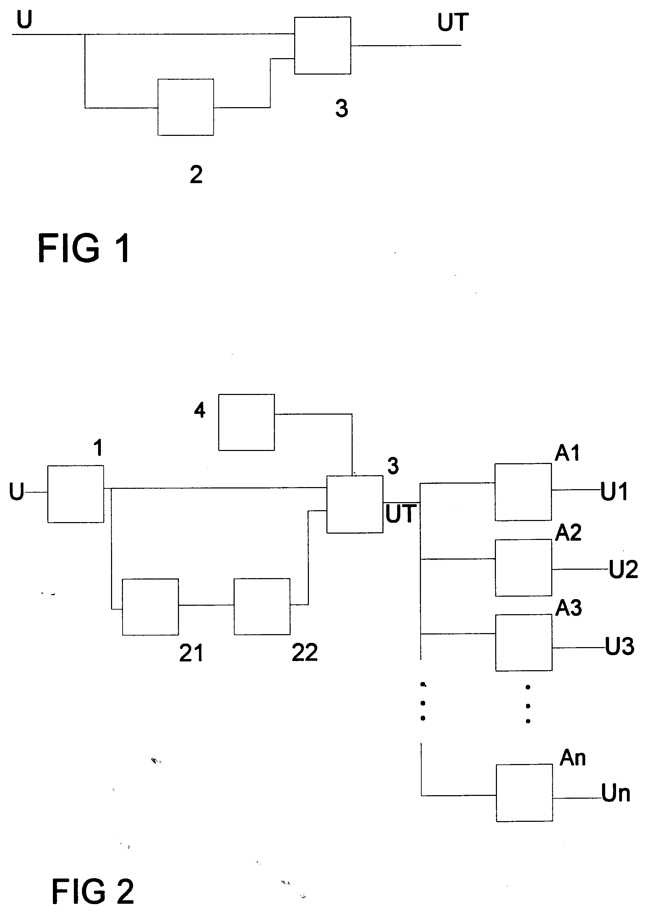

Eine Schaltungsanordnung zur Durchführung des Verfahrens wird anhand von FIG. 1 und FIG. 2 beschrieben.
Als Signal zur Erkennung von Multipathstörungen wird im folgenden beispielhaft die Feldstärke U, insbesondere die ungewichtete, nicht bandbegrenzte Feldstärke, herangezogen.
Das Feldstärkesignal U dient als Eingangssignal für die Erkennung von Multipathstörungen.

Die Schaltungsanordnug besteht aus einer Spitzenwertgleichrichtereinheit 2 und einer Komparatoreinheit 3. Die Spitzenwertgleichrichtereinheit 2 besteht aus einem Spitzenwertgleichrichter mit Integrator richtet das Eingangsignal U spitzenwertgleich. Zugleich lädt die Spitzenwertgleichrichtereinheit 2 die Zeitkonstante des Integrators auf den momentanen Maximalwert des Eingangssignals U auf. Dieses spitrenwertgleichgerichtete Eingangssignal und das Eingangssignal U dienen als Einangssignale der Komparatoreinheit 3. Diese vergleicht das Eingangssignal U mit dem spitzenwertgleichgerichteten Eingangssignal U. Die Triggerschwelle der Komparatoreinheit 3 ist über eine Einstelleinheit 4 in der Empfindlichkeit einstellbar. Beim Vorliegen von kurzzeitigen Einbrüchen des Signalpegels des Eingangssignals U erkennt dies die Komparatoreinheit 3 durch Vergleich mit dem Pegel des Spitzenwertgleichgerichteten Eingangssignals und triggert auf diese Signaleinbrüche. Somit erzeugt die Komparatoreinheit 3 ein Ausganssignal UT, im Falle des Vorliegens von Multipathstörungen. Anhand dieses Triggersignals können nachgeschaltetet Funktionseinheiten T1 bis Tn auf die Multipathstörung reagieren.

In einer vorteilhaften Ausgestaltung der Erfindung wird das Eingangssignal U über eine Pufferstufe 1 geführt. Durch diese Pufferstufe 1 wird der Pegel des Eingangssignals U an die weitere Verarbeitungsstufen angepaßt; zugleich erfolgt eine Signalentkopplung.

Der Komparatoreinheit 3 sind Funktionseinheiten T1 bis Tn nachgeschaltet, welche das Ausgangssignal UT der Komparatoreinheit 3 für weitere Maßnahmen verwenden, um die erkannten Multipathstörungen zu unterdrücken oder zu mindern. Die Funktionseinheiten T1 bis Tn sind in vorteilhafter weise Zeitkonstenschaltungen, welche aus diesem Signal UT jeweils mindestens ein Steuersignal (U1 bis Un) generieren. In vorteilhafter Weise ist beispielsweise gewinnt die Zeitkonstantenschaltung T1 aus dem Signal UT ein Signal U1, welches zur Ansteuerung einer dynamischen Höhenabsenkung (Highcut) dient. Die Zeitkonstantenschaltung T2 gewinnt beispielsweise aus dem Signal UT ein Signal U2 zur Ansteuerung der Stereo-Mono-Überblendung (Stereoblend) und eine weitere Zeitkonstantenschaltung Tn gewinnt aus dem Signal UT ein Signal Un zur Lautstärkebeeinflussung (Mute).
In einer weiteren vorteilhaften Ausgestaltung der Erfindung wird das Signal UT direkt an einen Digitaleingang eines Mikrocomputers weitergeleitet. Der Mikrocomputer verarbeitet das Signal weiter und generiert hieraus verschiedene Steuerbefehle. Desweiteren kann das Signal UT über eine weitere Zeitkonstantenschaltung Tn an den A/D-Eingang des Mikrocomputers geleitete werden.Der Mikrocomputer verarbeitet das Signal weiter und generiert hieraus verschiedene Steuerbefehle. Schließlich besteht die Möglichkeit das Signal UT über einen angeschlossenes Bussystem an anderer Funktionsblöcke zu leiten und dort weiter zu verarbeiten.

Die Spitzenwertgleichrichtereinheit 2 ist in vorteilhafter Weise durch einen Gleichrichter 21 und einen Integrator 22 realisiert. Die Komparatoreinheit 3 ist als schwimmender Komparator realisiert.

In einer weiteren Ausgestaltungsform der Erfindung ist die Komparatoreinheit 3 in Form eines Differenzverstärker, die Zeitkonstantenschaltungen T1, T2 bis Tn sind durch T-Glieder realisiert. Die Widerstände der T-Glieder sind derart gestaltet, daß deren Widerstand frei veränderlich ist.

## Patentansprüche

1. Verfahren zur Erkennung von Multipathstörungen in einem Signal, wobei ein Eingangssignal, welches mit Multipathstörungen behaftet ist, spitzenwertgleichgerichtet und integriert wird,
das spitzenwertgleichgerichtete und integrierte Eingangssignal und das unveränderte Eingangssignal einer Komparatorschaltung zugeführt wird, das spitzenwertgleichgerichtete und integrierte Eingangssignal mit dem unveränderten Eingangssignal von der Komparatorschaltung verglichen wird, die Komparatorschaltung auf die bei Multipathstörungen auftretenden kurzzeitigen Signaleinbrüche (negative Spikes) reagiert, da der Pegel des Eingangssignals unter den integrierten Wert des spitzenwertgleichgerichteten Eingangssignals absinkt und in diesem Fall weitere Maßnahmen zur Reduktion von Multipathstörungen eingeleitet werden.

2. Verfahren nach Anspruch 1,
**dadurch gekennzeichnet, daß**
als weitere Maßnahmen zur Reduktion von Multipathstörungen eine dynamische Höhenabsenkung (Highcut), eine Stereo-Mono-Überblendung (Stereoblend), eine Lautstärkebeeinflussung (Mute), eine Signalsisierung eines Mikrocomputers und/oder eine Signalsierung an weitere Baugruppen durchgeführt wird.

3. Verfahren nach Anspruch 1 oder 2,
**dadurch gekennzeichnet, daß**
als Eingangssignal die Feldstärke oder das Multiplexsignal verwendet wird.

4. Schaltungsanordnung zum Durchführen des Verfahrens nach einem der Ansprüche 1 bis 3, bestehend aus einer Spitzenwertgleichrichtereinheit (2) und einer Komparatoreinheit (3), wobei
die Spitzenwertgleichrichtereinheit (2), bestehend aus einem Gleichrichter (21) und einen Integrator (22), das Eingangsignal (U), insbesondere die nicht bandbegrente Feldstärke des Antennensignals, spitzenwertgleichrichtet und integriert,
die Komparatoreinheit (3) das Eingangssignal (U) mit dem spitzenwertgleichgerichteten und integrierten Eingangssignal (U) vergleicht, beim Vorliegen von kurzzeitigen Signaleinbrüchen des Signalpegels des Eingangssignals (U) die Komparatoreinheit (3) auf diese Signaleinbrüche reagiert und ein Ausganssignal (UT) erzeugt, anhand dieses Ausgangssignals (UT) reagieren nachgeschaltete Funktionseinheiten (T1 bis Tn) auf die Multipathstörung.

5. Schaltungsanordnung nach Anspruch 4,
**dadurch gekennzeichnet, daß**
die nachgeschalteten Funktionseinheiten (T1 bis Tn) Zeitkonstantenschaltungen sind, welche aus diesem Signal (UT) jeweils mindestens ein Steuersignal (U1 bis Un) generieren.

6. Schaltungsanordnung nach Anspruch 4 oder 5,
**dadurch gekennzeichnet, daß**
die Zeitkonstantenschaltung (T1) aus dem Signal (UT) am Ausgang der Komparatoreinheit (3) ein Signal (U1) zur Ansteuerung einer dynamischen Höhenabsenkung (Highcut),
die Zeitkonstantenschaltung (T2) aus dem Signal (UT) am Ausgang der Komparatoreinheit (3) ein Signal (U2) zur Ansteuerung der Stereo-Mono-Überblendung (Stereoblend), und/oder
eine weitere Zeitkonstantenschaltung (Tn) aus dem Signal (UT) am Ausgang der Komparatoreinheit (3) ein Signal (Un) zur Lautstärkebeeinflussung (Mute) generiert.

7. Schaltungsanordnung nach einem oder mehreren der Ansprüche 4 bis 6,
**dadurch gekennzeichnet, daß**
das Ausgangssignal (UT) zur Signalisierung an einen Mikrocomputer und/oder über ein Bussystem zur Signalsierung weiterer Baugruppen dient.

8. Schaltungsanordnung nach einem oder mehreren der Ansprüche 4 bis 7,
**dadurch gekennzeichnet, daß**
die Zeitkonstantenschaltungen (T1), (T2) bis (Tn) durch T-Glieder realisiert sind und diese T-Glieder Widerstände aufweisen, deren Widerstand frei veränderlich ist.

9. Schaltungsanordnung nach einem oder mehreren der Ansprüche 4 bis 8,
**dadurch gekennzeichnet, daß**
die Komparatoreinheit (3) als schwimmender Komparator realisiert ist.

10. Schaltungsanordnung nach einem oder mehreren der Ansprüche 4 bis 8,
**dadurch gekennzeichnet, daß**
die Komparatoreinheit (3) durch einen Differenzverstärker realisiert ist.

11. Schaltungsanordnung nach einem oder mehreren der Ansprüche 4 bis 10,
**dadurch gekennzeichnet, daß**
die Reaktionsschwelle der Komparatoreinheit (3) über eine Einstelleinheit (4) einstellbar ist.
